# EUROPEAN PATENT APPLICATION

(11) **EP 3 332 677 A2**
(43) Date of publication of application: **13.06.2018**
(21) Application number: 16833337.5
(22) Date of filing: 02.08.2016
(51) Int. Cl.: A47J 31/20, A47J 31/00, A47J 31/44, A47J 31/06, A47J 31/02, A47J 31/32

(54) **PORTABLE DRINK EXTRACTOR USING PRESSURE**

(30) Priority: 03.08.2015 KR 20150109506; 06.04.2016 KR 20160042414
(71) Applicant: Beanscorp Co., Ltd., Seoul 08501 (KR)
(72) Inventor: YOON, Han Sang, Seoul 08004 (KR)
(74) Representative: dompatent von Kreisler Selting Werner - Partnerschaft von Patent- und Rechtsanwälten mbB
(86) International application number: PCT/KR2016/008521
(87) International publication number: WO 2017/023101

(57) **Abstract**

A portable drink extractor using pressure according to the present invention may include a main body which is formed to be extendable/contractible in a longitudinal direction so that a drink is extracted by pressurizing contents stored in the main body; a filter which is placed at one open side of the main body; and a cap which is provided at one open side of the main body. According to the portable drink extractor using pressure according to the exemplary embodiments of the present invention, the main body, which stores contents, is formed to be extendable/contractible, and as a result, it is possible to allow a user to conveniently extract a drink with a small effort in comparison with a technology in the related art in which contents are pressurized by a method using a piston.

## Description

### [Technical Field]

The present invention relates to a drink extractor, and more particularly, to a portable drink extractor using pressure which is capable of extracting a drink such as tea or coffee by pressurizing contents stored in the drink extractor.

### [Background Art]

In general, a user drinks a drink such as tea or coffee by buying the drink or preparing the drink by using a tea bag or instant foods. However, recently, many users buy raw materials such as coffee bean powder or tea leaf powder required to make tea or coffee, and drink the tea or the coffee by making the drink based on their preference.

Meanwhile, brewed coffee is made by various methods such as a hand drip method, a method using an espresso machine, and a method using a French press. The hand drip method is a most widely used method of making coffee by putting a conical paper filter into a funnel-shaped dripper, putting coffee bean powder onto the paper filter, and pouring hot water onto the coffee bean powder to allow the brewed coffee to flow into a container positioned under the dripper. The method using the espresso machine is a method of quickly extracting coffee by using the espresso machine, and the method using the French press is a method of extracting coffee by putting coffee bean powder into a tubular glass container such as a syringe, pouring hot water, and then pressurizing the coffee bean powder with a filter made of a metal material.

Recently, the method using the espresso machine, which quickly and conveniently makes coffee, is widely used, but the espresso machine is high in price and has a large volume, and as a result, many families or many individuals generally uses the hand drip method or the method using the French press. In particular, the number of people, who extracts coffee by using the French press, is increasing, because in the case of the hand drip method, taste of coffee varies depending on a method of pouring water or the amount of water, and a large amount of time is required to extract coffee.

The method of extracting coffee by using the French press will be described in more detail. The method using the French press is a method of putting coffee bean powder into a container, pouring hot water into the container, inserting a strainer having a filter into the container from above the container, and then filtering out the coffee bean powder. The method using the French press has an advantage in making coffee similar to espresso coffee because the French press may comparatively quickly brew coffee.

Meanwhile, in the case of the method using the French press, a user presses the strainer having multiple holes against coffee bean powder in order to separate the coffee bean powder and coffee (liquid) brewed from the coffee bean powder, and then the user drinks the coffee (liquid) after separating the coffee (liquid) from the coffee bean powder. However, the method using the French press has a problem in that a great effort and a large amount of time is required to extract coffee (liquid) from coffee bean powder. In addition, the French press is also portable, but there is a problem in that it is difficult to extract brewed coffee while carrying the French press.

Therefore, the present applicant proposes the present invention in order to solve the aforementioned problems, and as literature of related art, there is Korean Patent (entitled "Coffee Injection Press for Stackable Cup", registered on August 6, 2012).

### [Disclosure]

### [Technical Problem]

An object of the present invention is to provide a portable drink extractor using pressure which is capable of allowing a user to conveniently extract a drink even with a small effort and easily carry and store the drink extractor.

Technical problems of the present invention are not limited to the aforementioned technical problem, and other technical problems, which are not mentioned above, may be clearly understood by those skilled in the art from the following descriptions.

### [Technical Solution]

The object may be achieved by the present invention that provides a portable drink extractor using pressure, including: a main body which is formed to be extendable/contractible in a longitudinal direction so that a drink is extracted by pressurizing contents stored in the main body; a filter which is placed at one open side of the main body; and a cap which is provided at one open side of the main body.

The cap may be detachably coupled to the main body in a state in which the filter is accommodated in the cap.

The main body may include an extendable/contractible corrugated tube.

The main body may further include a coupling tube which is provided at one open side of the corrugated tube and coupled to the cap, the corrugated tube and the coupling tube may be made of synthetic resin, and the coupling tube may be made of synthetic resin harder than synthetic resin of the corrugated tube.

When the main body is in a compressed state, the cap may be coupled to the main body and may block an inflow air into the main body to maintain the compressed state of the main body.

The cap may be separated from one open side of the main body and coupled to the other side of the main body when extracting a drink.

The portable drink extractor may further include a support bracket which is provided at one open side of the main body and supports the main body with respect to a separate drink container when extracting a drink.

An air discharge port, which is configured to discharge air in the main body to the outside when extracting a drink, may be provided in the support bracket.

The cap may be separated from one open side of the main body and coupled to the other side of the main body when extracting a drink, and the cap and the support bracket may provide portions which are held by a user during a process of extending and contracting the main body when extracting the drink.

The main body may further include a coupling bracket which is provided at one open side of the corrugated tube and coupled to the cap to support the corrugated tube with respect to a separate container when extracting a drink.

The portable drink extractor may further include a guide body which is provided on the main body and guides extension and contraction of the main body.

The guide body may be formed to surround the corrugated tube.

The guide body may be provided to have a telescopic structure, and may include a press unit which is coupled to the other side of the main body, and telescopic units which have a multi-stage structure connected to the press unit and have diameters that gradually increase.

The telescopic unit may be provided with a guide slot which is formed in the form of an oblong hole, and a guide protrusion which is moved along the guide slot.

The press unit may be coupled and fixed to the other end portion of the corrugated tube.

The main body may further include a coupling bracket which is provided at one open side of the corrugated tube and coupled to the cap to support the corrugated tube with respect to a separate container when extracting a drink, and the coupling bracket may be coupled to a lowermost telescopic unit among the telescopic units having the multi-stage structure in a state in which a flange portion of the corrugated tube is interposed.

A surface of the coupling bracket, which is in contact with the flange portion, may provide a sealing structure together with the flange portion.

An air discharge port, which is configured to discharge air in the main body to the outside when extracting a drink, may be provided in the main body.

The filter may include a main filter which is coupled to one open side of the main body, and an auxiliary filter which is interposed between the main filter and an inner stepped portion formed on the main body.

In addition, the present invention may be achieved by a portable drink extractor using pressure, including: a main body which is formed to be extendable/contractible in a longitudinal direction so that a drink is extracted by pressurizing contents stored in the main body; a cap which is provided at one open side of the main body; and a guide body which is provided on the main body and guides extension and contraction of the main body.

### [Advantageous Effects]

According to the portable drink extractor using pressure according to the present invention, the main body, which stores contents, is formed to be extendable/contractible, and as a result, it is possible to allow the user to conveniently extract a drink with a small effort in comparison with a technology in the related art in which contents are pressurized by a method using a piston.

In addition, according to the portable drink extractor using pressure according to the present invention, the guide body for supporting the main body is provided, such that a loss of frictional force is minimized so that an unnecessary loss of pressure does not occur when pressing the main body, and as a result, the user may easily extract a drink.

Further, according to the portable drink extractor using pressure according to the present invention, a volume of the portable drink extractor using pressure itself may be reduced as the main body is maintained in the compressed state by using a cap, and as a result, the user may easily carry and move the portable drink extractor.

### [Description of Drawings]

FIG. 1 is an exploded perspective view of a portable drink extractor using pressure according to a first exemplary embodiment of the present invention.
FIG. 2 is a coupled perspective view illustrating a state in which the portable drink extractor using pressure illustrated in FIG. 1 is inverted.
FIG. 3 is a view illustrating a state in which a main body of the portable drink extractor using pressure illustrated in FIG. 2 is compressed.
FIG. 4 is a coupled cross-sectional view of the portable drink extractor using pressure illustrated in FIG. 1.
FIG. 5 is a coupled perspective view when the portable drink extractor using pressure illustrated in FIG. 2 extracts a drink.
FIG. 6 is a view illustrating a state in which the portable drink extractor using pressure illustrated in FIG. 5 is used.
FIG. 7 is an exploded perspective view of a portable drink extractor using pressure according to a second exemplary embodiment of the present invention.
FIG. 8 is a coupled perspective view illustrating a state in which the portable drink extractor using pressure illustrated in FIG. 7 is inverted.
FIG. 9 is a view illustrating a state in which a main body of the portable drink extractor using pressure illustrated in FIG. 8 is compressed.
FIG. 10 is a coupled cross-sectional view of the portable drink extractor using pressure illustrated in FIG. 8.
FIG. 11 is an enlarged view of part A illustrated in FIG. 10.
FIG. 12 is a view illustrating a state in which the portable drink extractor using pressure illustrated in FIG. 8 is used.

### [Best Mode]

Hereinafter, exemplary embodiments of the present invention will be described in detail with reference to the accompanying drawings so that those skilled in the technical field to which the present invention pertains may easily carry out the exemplary embodiment. The present invention may be implemented in various different ways, and is not limited to the exemplary embodiments described herein.

It is noted that the drawings are schematic, and are not illustrated based on actual scales. Relative dimensions and proportions of parts illustrated in the drawings are exaggerated or reduced in size for the purpose of clarity and convenience in the drawings, and any dimension is just illustrative but not restrictive. Further, the same reference numerals designate the same structures, elements or components illustrated in two or more drawings in order to exhibit similar characteristics.

Exemplary embodiments of the present invention illustrate ideal exemplary embodiments in more detail. As a result, various modifications of the drawings are expected. Therefore, the exemplary embodiments are not limited to specific forms in regions illustrated in the drawings, and for example, include modifications of forms by the manufacture.

Hereinafter, a portable drink extractor using pressure (hereinafter, referred to as a 'drink extractor') according to exemplary embodiments of the present invention will be described with reference to the accompanying drawings.

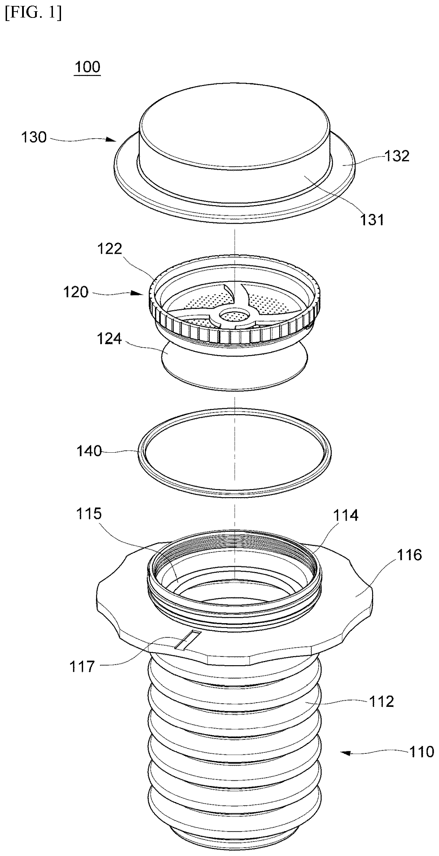

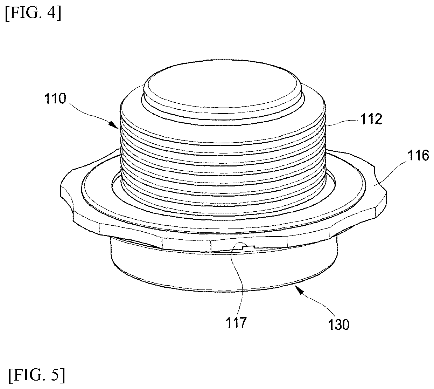

First, a drink extractor 100 according to a first exemplary embodiment of the present invention will be described with reference to FIGS. 1 to 6.

As illustrated in FIGS. 1 to 5, the drink extractor 100 according to the first exemplary embodiment of the present invention includes a main body 110 which is formed to be extendable/contractible in a longitudinal direction so as to extract a drink by pressurizing contents stored in the main body 110, a filter 120 which is placed at one open side of the main body 110, and a cap 130 which is provided at one open side of the main body 110.

Referring to FIG. 1, the main body 110 is a portion that stores therein the contents together with water. The contents stored in the main body 110 may be materials such as coffee bean powder or tea leaf powder for producing a drink. The main body 110 is formed to be extendable/contractible in the longitudinal direction so as to extract a drink by pressurizing the contents stored in the main body 110. Therefore, the drink extractor 100 of the present invention may extract a drink by pressurizing the contents by changing a volume of the main body 110 since the main body 110 is formed to be extendable/contractible.

The main body 110, which is structured as described above, includes a corrugated tube 112. The corrugated tube 112 is formed to be extendable/contractible. In the present invention, the portion, which is formed to be extendable/contractible in the longitudinal direction, is referred to as the corrugated tube 112, but the portion may be called a 'bellows' which is typically used.

In addition, the main body 110 includes a coupling tube 114. The coupling tube 114 is provided at one open side of the corrugated tube 112. Specifically, the coupling tube 114 is formed to extend from one side of the corrugated tube 112. The coupling tube 114 is formed in a hollow cylindrical shape, and a hollow internal space communicates with a space of the corrugated tube 112 where the contents are stored. An outer circumferential surface and an inner circumferential surface of the coupling tube 114 are configured to have threaded portions, respectively. Therefore, the filter 120 to be described below is coupled to the inner circumferential surface of the coupling tube 114, and the cap 130 to be described below is coupled to the outer circumferential surface of the coupling tube 114.

Here, the corrugated tube 112 and the coupling tube 114 are made of synthetic resin. Both of the corrugated tube 112 and the coupling tube 114 may be made of synthetic resin, and the coupling tube 114 may be made of synthetic resin harder than synthetic resin of the corrugated tube 112. The reason is that the corrugated tube 112 needs to be extendable/contractible in the longitudinal direction as described above, and for example, the corrugated tube 112 may be made of synthetic resin such as silicone resin having ductility. Therefore, the corrugated tube 112, which is made of silicone resin having ductility, is easily extended and contracted in the longitudinal direction, and the silicone resin is harmless to humans, and as a result, a user may drink the drink, which is extracted by pressurizing the contents stored in the corrugated tube 112, with an easy mind. On the contrary, the coupling tube 114 provides the portion to be coupled to the filter 120 and the cap 130 which will be described below, and as a result, the coupling tube 114 may be made of harder synthetic resin. For example, the coupling tube 114 may be made of polypropylene (PP).

Meanwhile, the corrugated tube 112 and the coupling tube 114 may be made of different materials and may be integrally formed by double injection molding. The reason is that in the case in which the corrugated tube 112 and the coupling tube 114, which are made of different materials, are formed by double injection molding, costs required to manufacture the corrugated tube 112 and the coupling tube 114 are reduced in comparison with a case in which the corrugated tube 112 and the coupling tube 114 are separately manufactured and then assembled.

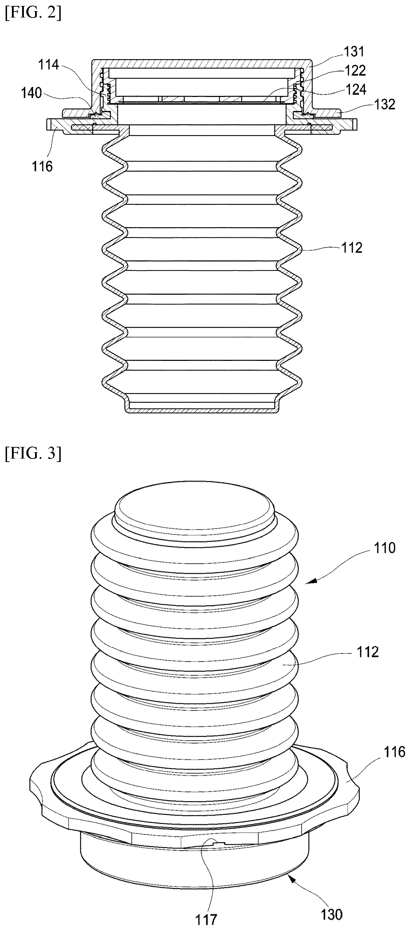

In addition, the main body 110 of the drink extractor 100 includes a support bracket 116. Referring to FIGS. 1 and 2, the support bracket 116 is provided at one open side of the main body 110 and supports the main body 110 against a separate drink container when extracting a drink. The support bracket 116 is provided on an outer circumferential surface of the main body 110 and may be provided between the corrugated tube 112 and the coupling tube 114 of the main body 110.

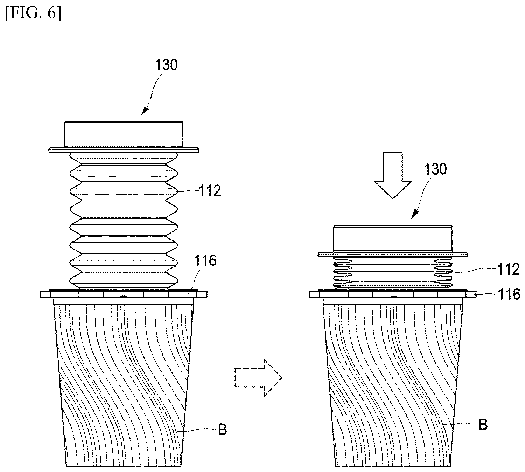

Referring to FIG. 6, a separate container B for storing the extracted drink is positioned under the support bracket 116 when extracting the drink by using the drink extractor 100. In this case, the support bracket 116 is formed to have a larger diameter than the coupling tube 114 of the main body 110 and formed in the form of a flange. The support bracket 116, which is formed in the form of a flange, allows the main body 110 to be easily placed on the separate container B.

In addition, the support bracket 116 may be made of synthetic resin. Specifically, the support bracket 116 may be made of a material harder than the material of the corrugated tube 112 and may be made of polypropylene (PP) which is a material identical to the material of the coupling tube 114. Therefore, the support bracket 116 is formed integrally with the corrugated tube 112 and the coupling tube 114 by double injection molding, such that it is possible to reduce costs required to manufacture the corrugated tube 112, the coupling tube 114, and the support bracket 116. In contrast, the support bracket 116 may be manufactured separately from the corrugated tube 112 and the coupling tube 114 and then coupled to the corrugated tube 112 and the coupling tube 114.

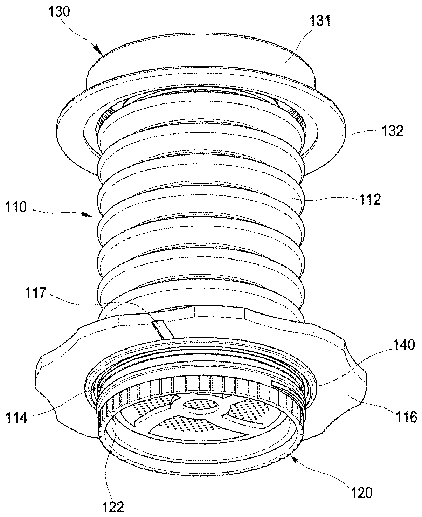

Referring to FIGS. 1 and 5, the support bracket 116 includes an air discharge port 117 through which air in the main body 110 is discharged to the outside when extracting a drink. The air discharge port 117 is formed in the form of a groove, but the air discharge port 117 is not necessarily limited thereto, and the air discharge port 117 may be implemented in the form of a groove or hole formed to the extent that air may be discharged through the air discharge port 117.

The air discharge port 117 discharges air, which is formed in the main body 110, that is, in the corrugated tube 112 and the coupling tube 114, to the outside when extracting a drink by using the portable drink extractor 100 using pressure. If a drink is extracted in a state in which air exists in the main body 110, that is, in the corrugated tube 112 and the coupling tube 114 because the air discharge port 117 is not provided in the support bracket 116, the user needs to make a great effort to compress the main body 110 because of pressure of the air existing in the main body 110 including the corrugated tube 112 and the coupling tube 114, and as a result, it is difficult to extract a drink because it is difficult to completely compress the main body 110. Therefore, at least one air discharge port 117 may be formed in the support bracket 116.

Referring to FIGS. 1 and 2, the filter 120 is placed at one open side of the main body 110. The filter 120 includes a main filter 122 and an auxiliary filter 124. The main filter 122 is coupled at one open side of the main body 110. Specifically, an outer circumferential surface of one end portion (*see* FIG. 2) of the main filter 122 is placed on an upper end portion of the support bracket 116 of the main body 110, that is, an upper end portion of the coupling tube 114, and an outer circumferential surface of the other end portion (*see* FIG. 2) of the main filter 122 is coupled to an inner circumferential surface of the support bracket 116 of the main body 110, that is, the inner circumferential surface of the coupling tube 114. The main filter 122 is provided as a metal filter and has a strainer shape. The shape of the main filter 122 is not necessarily limited thereto and may be modified.

Meanwhile, the auxiliary filter 124 is detachably interposed between the main filter 122 and the main body 110, that is, a stepped portion 115 formed in the inner circumferential surface of the support bracket 116. The auxiliary filter 124 is provided in a shape different from the shape of the main filter 122 and made of a material different from the material of the main filter 122, and for example, the auxiliary filter 124 may be made of paper. For reference, the drink extractor 100 according to the first exemplary embodiment of the present invention may use only the main filter 122 or both of the main filter 122 and the auxiliary filter 124. The use of only the main filter 122 or the use of both of the main filter 122 and the auxiliary filter 124 may be selected in accordance with a body of a drink felt by the user, that is, the user's preference for a drink that the user intends to drink.

Referring to FIGS. 1, 2, and 5, the cap 130 is detachably coupled to one open side of the main body 110. The cap 130 includes a cap body 131 and a flange body 132. The cap body 131 is formed in a cylindrical shape which is closed at one end portion and opened at the other end portion, and the flange body 132 is formed in a flange shape on an outer circumferential surface of the other end portion of the cap body 131 which is opened. In this case, the flange body 132 may be formed to have a sufficiently larger diameter than that of the main body 110 and may provide a portion which is held by the user when extracting a drink.

The cap 130 is detachably coupled to one open side of the main body 110 and may open or close one open side of the main body 110. Here, the cap 130 may be detachably coupled to the main body 110 in a state in which the filter 120 is accommodated in the cap 130. The cap 130 is coupled to the main body 110 in the state in which the filter 120 is accommodated in the cap 130 in order to implement a compact structure of the drink extractor 100, improve portability, and easily store the filter 120. In addition, since the cap 130 is coupled to the main body 110 in the state in which the filter 120 is accommodated in the cap 130, it is possible to protect the filter 120 and prevent foreign substances from flowing into the filter 120 and the main body 110.

In addition, the cap 130 maintains a compressed state of the main body 110. That is, when the cap 130 is coupled to the main body 110 in a case in which the main body 110 is compressed, the cap 130 prevents air from flowing into the main body 110, thereby maintaining the compressed state of the main body 110. In other words, when the main body 110 is compressed to a position close to the cap 130, one open side of the main body 110 is closed by the cap 130, thereby maintaining the compressed state of the main body 110.

In this case, referring to FIG. 1, a packing 140 is interposed between the main body 110 and the cap 130. The packing 140 is placed between the main body 110 and the cap 130, that is, between the main body 110 and the support bracket 116. Therefore, since the packing 140 is interposed between the cap 130 and the main body 110, it is possible to improve a sealing performance of the cap 130 with respect to the main body 110.

Meanwhile, as illustrated in FIG. 5, the cap 130 may be separated from one open side of the main body 110 and then coupled to the other side of the main body 110. The cap 130 may be coupled to one open side of the main body 110 when the user carries or stores the drink extractor 100, and when the user extracts a drink by using the drink extractor 100, the cap 130 may be separated from one open side of the main body 110 and then coupled to the other side of the main body 110 which is the opposite side where the coupling tube 114 is not formed. If the cap 130 is not positioned at the other side of the main body 110 when extracting a drink, it is difficult for the user to directly compress the hot main body 110 when the user directly compresses the main body 110 that stores coffee bean powder or tea leaf powder and hot water, and an overall amount of force applied by the user is not transmitted to the main body 110 because the main body 110 is made of silicone resin or the like having ductility, and as a result, it is difficult to extract a drink by effectively pressurizing the contents. Therefore, the cap 130 may be separated from one open side of the main body 110 and then coupled to the other side of the main body 110 when extracting a drink, thereby providing a portion to which the user may stably apply force.

In addition, the cap 130, which is coupled to the other closed side of the main body 110 as described above, serves as a stand of the main body 110. In other words, since the cap 130 is coupled to the other closed side of the main body 110 and supports the main body 110, such that coffee bean powder or tea leaf powder and hot water may be stably stored in the main body 110 made of extendable/contractible silicone resin or the like having ductility.

Referring to FIG. 6, since the cap 130 is positioned at the other closed side of the main body 110, the user may conveniently extract a drink while holding, with both hands, the support bracket 116 and the flange body 132 of the cap 130 coupled to the other side of the main body 110. That is, the support bracket 116, together with the cap 130, provides the portion which is held by the user during a process of extending or contracting the main body 110 when extracting a drink. The user may extract a drink by holding the support bracket 116 and the flange body 132 of the cap 130 coupled to the other side of the main body 110, and as a result, it is possible to extract a drink even in a state in which the separate container B is not positioned under the support bracket 116, and it is possible to conveniently extract a drink while preventing the container from being crushed even though the separate container B is made of a material having low rigidity, for example, a material which is crushed like a paper cup.

Hereinafter, an example in which the drink extractor 100 according to the first exemplary embodiment of the present invention, which is configured as described above, is used will be described with reference to FIGS. 5 and 6.

First, the cap 130, which has been coupled to one open side of the main body 110, is coupled to the other side of the main body 110.

Next, the filter 120, that is, the main filter 122 is withdrawn from the main body 110.

Next, contents such as coffee bean powder or tea leaf powder related to a drink to be extracted are stored in the corrugated tube 112 of the main body 110, and hot water, which is suitable for the amount of stored contents, is stored. In this case, the amount of contents or hot water stored in the corrugated tube 112 may be smaller than a height of the corrugated tube 112.

Next, the main filter 122, which has been withdrawn from the main body 110, is coupled to the main body 110 again. In this case, the auxiliary filter 124 may be additionally interposed on the stepped portion 115 provided at the inner circumference of the main body 110.

Next, as illustrated in FIG. 6, the drink extractor 100 is positioned with respect to the separate container B for storing the drink to be extracted so that the support bracket 116 is in contact with the separate container B.

Next, the user pushes the cap 130 in a direction indicated by the arrow illustrated in FIG. 6 or holds the cap 130 and the support bracket 116 simultaneously with the thumb and the index finger to decrease an interval between the cap 130 and the support bracket 116, thereby extracting a drink such as coffee or tea from the contents such as coffee bean powder or tea leaf powder stored in the corrugated tube 112 of the main body 110.

Finally, the user cleans the drink extractor 100 which has been completely used, discharges air to the outside by compressing the main body 110, closes one open side of the main body 110 by using the cap 130 to maintain the compressed state of the main body 110, and then conveniently carries or stores the drink extractor 100.

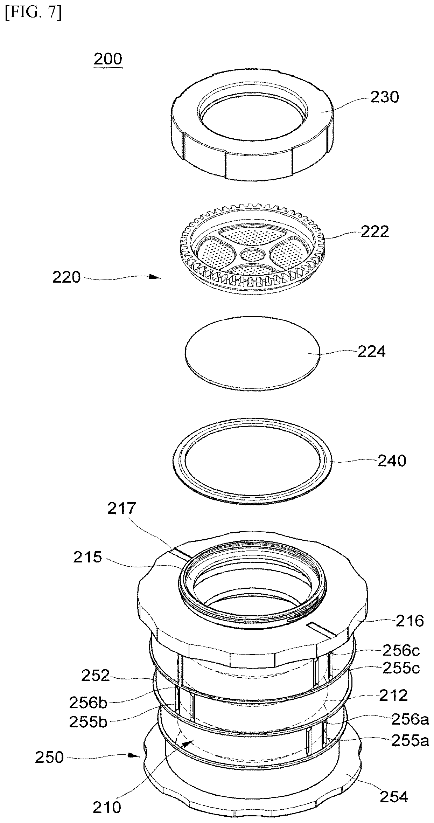

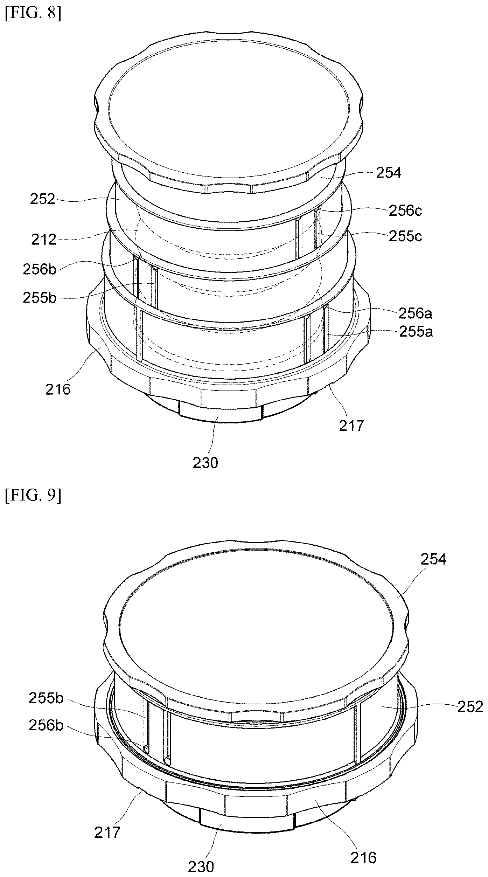

Meanwhile, a drink extractor 200 using pressure (hereinafter, referred to as a 'drink extractor') according to a second exemplary embodiment of the present invention will be described with reference to FIGS. 7 to 12, focusing on differences from the aforementioned exemplary embodiment.

Referring to FIGS. 7 to 12, the drink extractor 200 according to the present exemplary embodiment includes a main body 210 which is formed to be extendable/contractible in a longitudinal direction so as to extract a drink by pressurizing contents stored in the main body 210, a filter 220 which is placed at one open side of the main body 210, and a cap 230 which is provided at one open side of the main body 210.

Because the drink extractor 200 according to the present exemplary embodiment has a configuration substantially identical to the configuration of the drink extractor 100 according to the aforementioned exemplary embodiment except for some constituent elements of the main body 210, like reference numerals refer to like constituent elements, and descriptions of the constituent elements correspond to those of the aforementioned exemplary embodiment.

Referring to FIG. 7, the main body 210 includes a coupling bracket 216. The coupling bracket 216 is provided at one open side of the corrugated tube 212. Specifically, one part of the coupling bracket 216 is formed in an opened cylindrical shape, and the other part of the coupling bracket 216 is formed in a flange shape extending in one direction from the cylindrical shape. The portion of the coupling bracket 216, which is formed in a cylindrical shape, is provided at one open side of the corrugated tube 212, and the portion of the coupling bracket 216, which is formed in a flange shape, supports the main body 210 with respect to the separate drink container B when extracting a drink by using the drink extractor 200 according to the second exemplary embodiment of the present invention. Further, an inner circumferential surface and an outer circumferential surface at an upper end of the portion of the coupling bracket 216, which is formed in a cylindrical shape, are formed to have threaded portions. The filter 220 to be described below is provided on the inner circumferential surface of the coupling bracket 216 provided as described above, and the cap 230 to be described below is coupled to the outer circumferential surface of the coupling bracket 216.

In addition, air discharge ports 217, which are configured to discharge air in the main body 210 to the outside when extracting a drink by using the drink extractor 200, are provided in the coupling bracket 216. The air discharge port 217 is formed in the form of a groove or a recess, but the air discharge port 217 is not necessarily limited thereto as long as the air discharge port 217 has a size to the extent that air may be discharged through the air discharge port 217. If a drink is extracted in a state in which air exists in the main body 210 because the air discharge port 217 is not provided in the coupling bracket 216, the user needs to make a great effort to compress the main body 210 because of pressure of the air existing in the main body 210, and as a result, it is difficult to extract a drink because it is difficult to completely compress the main body 210. Therefore, at least one air discharge port 217 may be formed in the coupling bracket 216.

Meanwhile, the corrugated tube 212 and the coupling bracket 216 may be made of different synthetic resin materials, and the coupling bracket 216 may be made of a material harder than a material of the corrugated tube 212. The corrugated tube 212 needs to be made of a flexible material because the corrugated tube 212 is configured to pressurize the contents stored therein. In other words, the corrugated tube 212 is made of silicone resin having ductility and easily extended and contracted in the longitudinal direction, and because the silicone resin is harmless to humans, the user may drink the drink extracted by pressurizing the contents stored in the corrugated tube 212 with an easy mind. In contrast, the coupling bracket 216 may be made of harder synthetic resin because the coupling bracket 216 is coupled to the filter 220 and the cap 230, which will be described below, and the coupling bracket 216 needs to be positioned at an upper end portion of the separate container B in order to extract a drink, and for example, the coupling bracket 216 is made of polypropylene (PP).

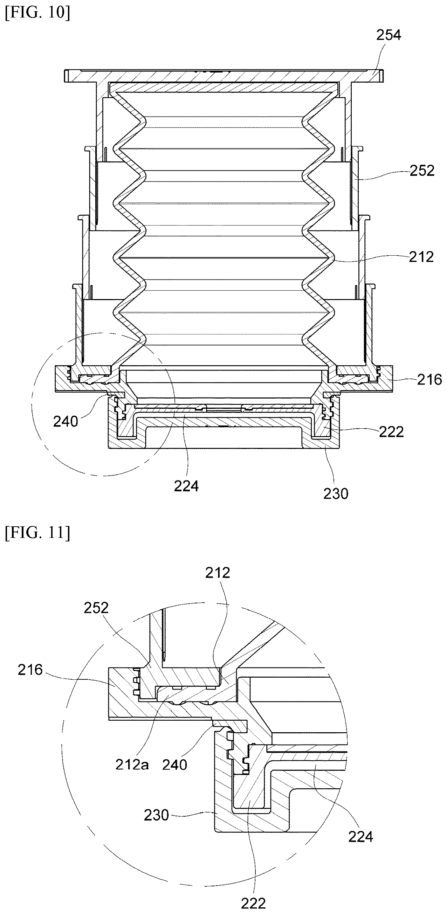

Referring to FIGS. 7 and 10, the filter 220 is placed at one open side of the main body 210. The filter 220 includes a main filter 222 and an auxiliary filter 224. The main filter 222 is placed at one open side of the main body 210, that is, one side of the coupling bracket 216. In other words, one part of the main filter 222 is placed at an upper end portion of the coupling bracket 216, and the other part of the main filter 222 is coupled to the inner circumferential surface of the coupling bracket 216. The main filter 222 is provided as a metal filter and has a strainer shape. The shape of the main filter 222 is not necessarily limited thereto and may be modified.

Meanwhile, the auxiliary filter 224 is interposed between the main filter 222 and a stepped portion 215 formed on the inner circumferential surface of the coupling bracket 216. The auxiliary filter 224 is provided in a shape different from the shape of the main filter 222 and made of a material different from the material of the main filter 222, and for example, the auxiliary filter 224 may be made of paper. For reference, the drink extractor 200 according to the second exemplary embodiment of the present invention may use any one of the main filter 222 and the auxiliary filter 224 or both of the main filter 222 and the auxiliary filter 224. In other words, both of the main filter 222 and the auxiliary filter 224 may be used or any one of the main filter 222 and the auxiliary filter 224 may be selectively used in accordance with particle sizes of contents stored in the main body 210.

Referring to FIGS. 7 to 10, the drink extractor 200 according to the second exemplary embodiment of the present invention further includes a guide body 250 which guides extension and contraction of the main body 210. The guide body 250 means a guide structure configured to obtain upward and downward motions of the main body 210. The guide body 250 is provided to surround the main body 210 and has a telescopic structure, and the guide body 250 may be formed to have a structure that minimizes frictional force to prevent an unnecessary loss of pressure in the main body 210.

Here, the guide body 250 includes a press unit 254 which is coupled to the other side of the main body 210, and telescopic units 252 which have a multi-stage structure connected to the press unit 254 and have diameters that gradually increase. First, the telescopic units 252 have the multi-stage structure of which the diameters are gradually increased from an uppermost end to a lowermost end thereof. If the user presses the main body 210 and the main body 210 is compressed, the telescopic units 252 are compressed to a single stage together with the main body 210. In this case, the number of stages of the compressed telescopic units 252 may vary in accordance with the amount of contents stored in the main body 210, but the telescopic units 252 are generally compressed to a single stage together with the main body 210. In this case, one telescopic unit 252, which has a relatively small diameter, is positioned in another telescopic unit 252 which has a relatively large diameter, such that the telescopic units 252 are consequently compressed to a single stage.

For reference, the telescopic units 252 may be made of various materials and may be made of a transparent material. The reason is that it is necessary to recognize whether the main body 210 is completely compressed because the telescopic units 252 are configured to guide the extension and contraction of the main body 210. Therefore, since the telescopic units 252 are made of a transparent material, the user may recognize, even with the naked eye without difficulty, whether the main body 210 is compressed, and may adjust force to be applied to the main body 210.

In addition, the telescopic units 252 are provided with guide slots 255 and guide protrusions 256. The guide slot 255 is formed in the form of an oblong hole, and one or more, particularly, two guide slots 255 need to be provided in each of the telescopic units 252 having the multi-stage structure. Since the telescopic units 252 are also compressed as the main body 210 is compressed, air or pressure in the main body 210 is discharged through the multiple guide slots 255, such that the main body 210 may be stably compressed. Meanwhile, the guide protrusion 256 is also provided on each of the telescopic units 252 having the multi-stage structure. The guide protrusion 256 is sized to be movable along the guide slot 255, and at least one guide protrusion 256 is provided for each guide slot 255 and slides.

Here, the guide protrusion 256 is not fitted into the guide slot 255 provided in the same telescopic unit 252, but fitted into the guide slot 255 provided in another telescopic unit 252 which is provided adjacent to the telescopic unit 252 on which the guide protrusion 256 is provided. Referring to FIGS. 7 to 9, a guide protrusion 256a, which slides along a guide slot 255a provided in the uppermost telescopic unit 252, is provided on the press unit 254, a guide protrusion 256c, which slides along a guide slot 255c provided in the lowermost telescopic unit 252, is provided on the telescopic unit 252 positioned between the uppermost telescopic unit 252 and the lowermost telescopic unit 252, and a guide protrusion 256b, which slides along a guide slot 255b provided in the telescopic unit 252 positioned between the uppermost telescopic unit 252 and the lowermost telescopic unit 252, is provided on the uppermost telescopic unit 252.

Meanwhile, the press unit 254 is a part configured to support the telescopic units 252. In other words, the press unit 254 is coupled to the telescopic units 252 and stably supports the telescopic units 252. In addition, as illustrated in FIG. 10, the press unit 254 is coupled and fixed to the other end portion of the main body 210 as well as the telescopic units 252. In this case, a protrusion may be provided on the press unit 254 so that the press unit 254 is coupled and fixed to the other end portion of the main body 210, the press unit 254 may be coupled and fixed to the other end portion of the main body 210 by using a bonding agent, or the other end portion of the main body 210 may be formed to have a diameter similar to a diameter of the press unit 254 such that the press unit 254 may be coupled and fixed to the other end portion of the main body 210 by interference fit. The aforementioned configuration in which the press unit 254 and the other end portion of the main body 210 are coupled and fixed is made to prevent the main body 210 from swaying or being withdrawn from the press unit 254.

In addition, the press unit 254 guides the telescopic units 252 and the main body 210 and provides a portion which is held by the user with both hands when extracting a drink by using the drink extractor 200, thereby enabling the user to conveniently extract a drink. In other words, the user may extract a drink by holding the coupling bracket 216 and the press unit 254, such that the user may extract a drink without necessarily positioning the container B under the coupling bracket 216, and the user may extract a drink without causing deformation of and damage to the container B even when the container B made of any material is positioned.

Here, a structure for coupling the corrugated tube 212, the coupling bracket 216, and the telescopic units 252 will be described with reference to FIGS. 10 and 11. The coupling bracket 216 is coupled to the lowermost telescopic unit 252 among the telescopic units 252 having the multi-stage structure in a state in which a flange portion 212a of the corrugated tube 212 is interposed between the coupling bracket 216 and the lowermost telescopic unit 252. In other words, a flange portion 212a, which extends in one direction from the corrugated tube 212, is interposed in the coupling bracket 216, and the lowermost telescopic unit 252 is positioned to surround the interposed flange portion 212a. Here, a surface of the coupling bracket 216, which is in contact with the flange portion 212a, provides a sealing structure together with the flange portion 212a. In addition, at least one annular protrusion is provided on one surface of the flange portion 112a. With the sealing structure and the annular protrusion, it is possible to prevent a leak of contents stored in the corrugated tube 212, safely store liquid contents, and minimize a loss of frictional force, that is, a loss of pressing force when the user presses the main body 210.

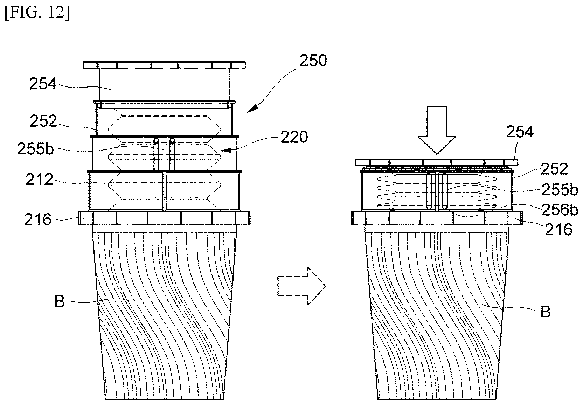

Hereinafter, an example in which the portable drink extractor 200 using pressure (hereinafter, referred to as the 'drink extractor') according to the second exemplary embodiment of the present invention is used will be described with reference to FIG. 12.

First, the cap 230 coupled to the main body 210 is separated.

Next, the filter 220, that is, the main filter 222, which is provided in the main body 210, is withdrawn.

Next, contents such as coffee bean powder or tea leaf powder related to a drink to be extracted are stored in the corrugated tube 212 of the main body 210, and hot or cold water, which corresponds to the amount of stored contents, is stored. Here, the amount of stored water may be adjusted in accordance with the amount of contents, and the water is stored to an indication line (not illustrated) marked in the corrugated tube 212. In this case, it should be noted the water does not overflow the corrugated tube 212.

Next, the main filter 222, which has been withdrawn from the main body 210, is placed on the main body 210 again. In this case, as necessary, the auxiliary filter 224 may be additionally positioned on the stepped portion 215 on the inner circumferential surface of the main body 210.

Next, as illustrated in the left view in FIG. 12, the drink extractor 200 is positioned with respect to the separate container B for storing the drink to be extracted so that the end portion of the coupling bracket 216 is positioned at the upper end portion of the separate container B.

Next, as illustrated in the right view in FIG. 12, the press unit 254 of the guide body 250 is pushed in a direction indicated by the arrow. Here, in accordance with the material of the container B or the user's preference, the user holds the press unit 254 and the coupling bracket 216 simultaneously with the thumb and the index finger to decrease an interval between the press unit 254 and the coupling bracket 216, thereby extracting a drink such as coffee or tea from the contents such as coffee bean powder or tea leaf powder stored in the corrugated tube 212 of the main body 210.

Finally, the user cleans the drink extractor 200 which has been completely used to extract the drink, discharges air in the main body 210 to the outside by simultaneously compressing the main body 210 and the guide body 250 of the drink extractor 200 which is completely cleaned, and then closes one open side of the main body 210 by using the cap 230 to decrease a volume of the main body 210 so that the main body 210 is maintained in the compressed state.

According to the portable drink extractors 100 and 200 using pressure according to the exemplary embodiments of the present invention which is configured as described above, the main body, which stores contents, is formed to be extendable/contractible, and as a result, it is possible to allow the user to conveniently extract a drink with a small effort in comparison with a technology in the related art in which contents are pressurized by a method using a piston.

In addition, according to the portable drink extractors 100 and 200 using pressure according to the exemplary embodiments of the present invention, the guide body for supporting the main body is provided, such that a loss of frictional force is minimized so that an unnecessary loss of pressure does not occur when pressing the main body, and as a result, the user may easily extract a drink.

Further, according to the portable drink extractors 100 and 200 using pressure according to the exemplary embodiments of the present invention, a volume of the portable drink extractor using pressure itself may be reduced as the main body is maintained in the compressed state by using a cap, and as a result, the user may easily carry and move the portable drink extractor.

While the exemplary embodiments of the present invention have been described above with reference to particular contents such as specific constituent elements, the limited exemplary embodiments, and the drawings, but the exemplary embodiments are provided merely for the purpose of helping understand the present invention overall, and the present invention is not limited to the exemplary embodiment, and may be variously modified and altered from the disclosure by those skilled in the art to which the present invention pertains. Therefore, the spirit of the present invention should not be limited to the described exemplary embodiment, and all of the equivalents or equivalent modifications of the claims as well as the appended claims belong to the scope of the spirit of the present invention.

### [Industrial Applicability]

The present invention may be used for a portable drink extractor or the like capable of extracting a drink such as tea or coffee by pressurizing contents stored in the drink extractor.

## Claims

1. A portable drink extractor using pressure, comprising:
a main body which is formed to be extendable/contractible in a longitudinal direction so that a drink is extracted by pressurizing contents stored in the main body;
a filter which is placed at one open side of the main body; and
a cap which is provided at one open side of the main body.

2. The portable drink extractor of claim 1, wherein the cap is detachably coupled to the main body in a state in which the filter is accommodated in the cap.

3. The portable drink extractor of claim 1, wherein the main body includes an extendable/contractible corrugated tube.

4. The portable drink extractor of claim 3, wherein the main body further includes a coupling tube which is provided at one open side of the corrugated tube and coupled to the cap, the corrugated tube and the coupling tube are made of synthetic resin, and the coupling tube is made of synthetic resin harder than synthetic resin of the corrugated tube.

5. The portable drink extractor of claim 1, wherein when the main body is in a compressed state, the cap is coupled to the main body and blocks an inflow air into the main body to maintain the compressed state of the main body.

6. The portable drink extractor of claim 1, wherein the cap is separated from one open side of the main body and coupled to the other side of the main body when extracting a drink.

7. The portable drink extractor of claim 1, further comprising:
a support bracket which is provided at one open side of the main body and supports the main body with respect to a separate drink container when extracting a drink.

8. The portable drink extractor of claim 7, wherein an air discharge port, which is configured to discharge air in the main body to the outside when extracting a drink, is provided in the support bracket.

9. The portable drink extractor of claim 7, wherein the cap is separated from one open side of the main body and coupled to the other side of the main body when extracting a drink, and the cap and the support bracket provide portions which are held by a user during a process of extending and contracting the main body when extracting the drink.

10. The portable drink extractor of claim 3, wherein the main body further includes a coupling bracket which is provided at one open side of the corrugated tube and coupled to the cap to support the corrugated tube with respect to a separate container when extracting a drink.

11. The portable drink extractor of claim 3, further comprising:
a guide body which is provided on the main body and guides extension and contraction of the main body.

12. The portable drink extractor of claim 11, wherein the guide body is formed to surround the corrugated tube.

13. The portable drink extractor of claim 11, wherein the guide body is provided to have a telescopic structure, and includes a press unit which is coupled to the other side of the main body, and telescopic units which have a multi-stage structure connected to the press unit and have diameters that gradually increase.

14. The portable drink extractor of claim 13, wherein the telescopic unit is provided with a guide slot which is formed in the form of an oblong hole, and a guide protrusion which is moved along the guide slot.

15. The portable drink extractor of claim 13, wherein the press unit is coupled and fixed to the other end portion of the corrugated tube.

16. The portable drink extractor of claim 11, wherein the main body further includes a coupling bracket which is provided at one open side of the corrugated tube and coupled to the cap to support the corrugated tube with respect to a separate container when extracting a drink, and the coupling bracket is coupled to a lowermost telescopic unit among the telescopic units having the multi-stage structure in a state in which a flange portion of the corrugated tube is interposed.

17. The portable drink extractor of claim 16, wherein a surface of the coupling bracket, which is in contact with the flange portion, provides a sealing structure together with the flange portion.

18. The portable drink extractor of claim 10, wherein an air discharge port, which is configured to discharge air in the main body to the outside when extracting a drink, is provided in the main body.

19. The portable drink extractor of claim 1, wherein the filter includes a main filter which is coupled to one open side of the main body, and an auxiliary filter which is interposed between the main filter and an inner stepped portion formed on the main body.

20. A portable drink extractor using pressure, comprising:
a main body which is formed to be extendable/contractible in a longitudinal direction so that a drink is extracted by pressurizing contents stored in the main body;
a cap which is provided at one open side of the main body; and
a guide body which is provided on the main body and guides extension and contraction of the main body.
